# FASCICULE DE BREVET EUROPEEN

(11) **EP 1 975 043 B1**
(45) Date de publication et mention de la délivrance du brevet: **15.09.2010**
(21) Numéro de dépôt: 08151719.5
(22) Date de dépôt: 21.02.2008
(51) Int. Cl.: B62D 25/10, B62D 25/12, B60R 21/34

(54) **Capot à doublure renforcée pour véhicule**
Kraftfahrzeug-Motorhaube mit verstärkter Auskleidung
Motor vehicle hood provided with a reinforced lining

(30) Priorité: 28.03.2007 FR 0754091
(43) Date de publication de la demande: 01.10.2008
(73) Titulaire: PEUGEOT CITROËN AUTOMOBILES S.A., 78140 Vélizy Villacoublay (FR)
(72) Inventeur: Bréfort, Laurent, 78280 Guyancourt (FR)

(56) Documents cités:
- EP-A1- 1 093 980
- WO-A-2006/042999
- DE-A1-102004 061 303

## Description

La présente invention concerne un capot à doublure renforcée pour véhicule, en particulier pour véhicule automobile et un véhicule équipé d'un tel capot.

Un capot de véhicule est constitué, de manière conventionnelle, d'un panneau externe, appelé « peau » formant le côté visible du capot, et d'un panneau interne de renfort, appelé « doublure ».

Pour donner au capot une certaine tenue géométrique, un peu de raideur statique et de l'inertie, la doublure et la peau sont collées et/ou serties sur la périphérie du capot, et des plots de calage, généralement en mastic de faible résistance, assurent une liaison entre la peau et la doublure sur le reste de la surface du capot.

Le capot, et plus particulièrement la doublure, sont également conçus avec une certaine souplesse, de manière à amortir le choc subi par la tête d'un piéton en cas d'accident et lui éviter des blessures graves, comme cela est prescrit par une réglementation européenne qui définit notamment une valeur maximale dite valeur HIC (acronyme de « Head Injury Criterium » pour « critère de blessure à la tête »).

Ainsi, les doublures de capot perdent beaucoup d'inertie, n'assurent plus réellement une de leur fonction essentielle qui est de « rigidifier » la peau du capot. De plus, du fait de ce manque d'inertie, le capot devient sensible aux déformations de nature aérodynamique qui peuvent être engendrées par la vitesse élevée du véhicule, surtout lors d'un croisement avec un véhicule poids lourd. Le capot est aussi sensible aux déformations dues à son propre poids lorsqu'il est maintenu sur sa béquille, par exemple, ou avec tout autre moyen de maintien.

Du fait de ces déformations, qui affectent l'impression de robustesse de la carrosserie du véhicule, les constructeurs automobiles cherchent à renforcer la doublure de capot.

Ainsi, par exemple, le document FR 2 875 777 décrit un capot de véhicule automobile, dans lequel la doublure présente en alternance des cavités et des reliefs allongés et parallèles. Les cavités, dont la cavité est dirigée vers la peau, sont réparties sur toute la surface du capot. Chaque cavité est formée de deux parois latérales planes reliées chacune à une paroi de fond plane.

On connaît également, selon le document JP 2001/233248, un capot de véhicule automobile, comprenant un panneau externe et un panneau interne, dans lequel il y a une structure verticale de renforcement principale. Cette structure principale comporte des renforts verticaux latéraux formés le long des deux bords latéraux du panneau interne, un renfort vertical avant formé le long du bord avant du panneau interne et relié aux extrémités avant des renforts verticaux latéraux, et une paire de renforts obliques disposés dans une partie médiane entre la partie centrale du renfort vertical avant et le milieu des renforts verticaux latéraux. Des zones à bourrelets sont formées dans les différentes parties de cette structure principale qui croisent une ligne de cintrage le long de la direction de la largeur du véhicule sensiblement dans le voisinage des parties de liaison entre les renforts verticaux latéraux et les renforts obliques.

On connait également des documents WO-A-2206/042999, DE-A-10 2004 061 303 et EP-A-10930980 des capots renforcés du type comportant des doublures de capot comportant des cavités dont la concavité est dirigée vers la peau du capot et dans laquelle au moins une cavité est fermée au moins partiellement par au moins une plaque de renfort laquelle est assemblée par une liaison rigide à au moins deux bords opposés de la cavité. Le document WO-A-2206/04299 décrit un capot renforcé qui couvre toutes les caractéristiques du préambule de la revendication 1.

Ces solutions techniques de l'art antérieur présentent l'inconvénient de rigidifier le capot avec des renforts plus ou moins volumineux.

Le but de la présente invention est de fournir un capot de véhicule, en particulier de véhicule automobile, qui remédie à cet inconvénient en intégrant des moyens de renforcement qui n'augmentent pas le volume des différentes pièces de renfort existantes de la doublure de capot.

Un autre but de la présente invention est de fournir un tel capot de véhicule, dont le renforcement soit de conception simple, de fabrication aisée et intégrée dans le procédé de fabrication de la doublure du capot.

C'est également un but de la présente invention de fournir un tel capot de véhicule, en particulier de véhicule automobile, dont la doublure soit renforcée pour augmenter son inertie sans toutefois pénaliser les contraintes imposées par la réglementation relative à la sécurité des piétons en cas de choc avec un véhicule automobile.

Pour parvenir à ces buts, la présente invention conçoit un nouveau capot de véhicule, en particulier de véhicule automobile, qui comprend une peau et une doublure, assemblée bord à bord à la peau et pourvue de raidisseurs, au moins une moulure obtenue par emboutissage de la doublure reliant entre eux des raidisseurs.

La doublure de capot peut être pourvue de deux raidisseurs latéraux situées dans le voisinage des deux articulations latérales du capot, respectivement, et d'un raidisseur central avant situé dans le voisinage du support de gâche du capot.

Selon un mode préféré de réalisation de l'invention, la moulure est composée de deux parties de moulure reliant chacune le raidisseur central et un raidisseur latéral, respectivement.

En variante, la moulure comporte, de plus, une troisième partie de moulure, qui relie les deux parties de moulure, de façon à constituer une moulure unique reliant les trois raidisseurs.

La forme de la section de la moulure peut être quelconque ou choisie parmi l'une des formes géométriques suivantes : arc de cercle, partie de rectangle, de carré, de triangle ou de trapèze.

La réalisation de la moulure est, de préférence, intégrée au procédé de fabrication par emboutissage de la doublure de capot.

D'autres buts, avantages et caractéristiques de l'invention apparaîtront dans la description qui suit de modes de réalisation préférés, non limitatifs de l'objet et de la portée de la présente demande de brevet, accompagnée de dessins dans lesquels :
- la figure 1 représente, une doublure de capot de véhicule automobile renforcée, selon la présente invention,
- la figure 2 est une vue en coupe, schématique, montrant la section d'une doublure de capot pourvue d'une moulure de renforcement, selon la présente invention, et
- la figure 3 représente une variante de la doublure de capot de véhicule automobile renforcée de la figure 1.

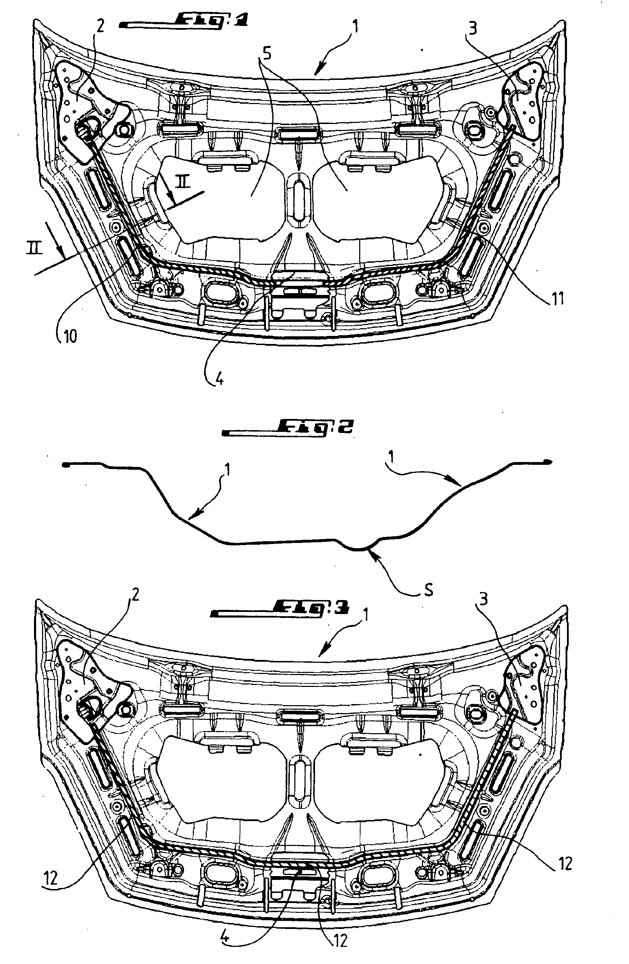

En référence au dessin de la figure 1, on a représenté une doublure 1 ou partie interne d'un capot de véhicule. De manière conventionnelle, la doublure 1 est assemblée bord à bord à la face interne de la peau du capot.

La doublure 1 est obtenue par emboutissage d'une plaque de tôle de faible épaisseur et de mêmes dimensions que le capot. Elle peut être obtenue par une autre technique de façonnage, connue en soi.

La doublure 1 présente, de manière connue en soi également, des renforts qui prennent la forme de plaques de renforcement fixées, par tout moyen connu en soi, dans plusieurs zones du capot. De façon non limitative de l'objet de la présente invention, la doublure 1 présente un renfort situé dans le voisinage de la gâche de fermeture du capot, qui peut être le support de gâche et qui est appelé raidisseur de gâche 4. La doublure présente aussi des renforts situés dans les deux parties latérales arrière d'articulation du capot, qui peuvent être les supports des charnières du capot et qui sont appelés raidisseurs d'articulation 2 et 3.

Une moulure en deux parties, référencées 10 et 11, relie le raidisseur de gâche 4 à l'un et l'autre des deux raidisseurs d'articulation 2, 3, respectivement. Le chemin de ces deux parties de moulure 10, 11 est sensiblement parallèle au bord avant du capot et contourne la zone centrale du capot, référencée 5. Il va de soi que le chemin représenté sur la figure 1 est donné à titre d'exemple ; d'autres chemins variés peuvent être envisagés pour la moulure, en partie ou en totalité, sans sortir du cadre de la présente invention.

La moulure en deux parties 10, 11 est réalisée par emboutissage de la doublure 1. L'opération d'emboutissage est intégrée à la fabrication de la doublure 1. Ainsi, la moulure en deux parties 10, 11 n'ajoute pas de matière à la matière constitutive de la doublure 1.

La moulure permet d'augmenter sensiblement l'inertie da la doublure 1 sans pénaliser les contraintes relatives à la réglementation en matière de sécurité des piétions en cas de choc avec un véhicule.

La section S de la moulure peut prendre les formes les plus variées. A titre d'exemple, on a représenté sur le dessin de la figure 2 une moulure de section S sensiblement en arc de cercle. D'autres formes géométriques ou non géométriques sont possibles. Parmi les formes géométriques, on peut avoir, par exemple, une section en forme de partie de rectangle, de carré, de triangle ou de trapèze.

Contrairement à la moulure emboutie 10, 11 en deux parties représentée sur la figure 1, la moulure peut être, en variante, une moulure emboutie en une seule partie référencée 12 sur le dessin de la figure 3.

La présente invention, telle que décrite ci-dessus, réalise un compromis entre le besoin de rigidifier l'ensemble du capot et la nécessité d'une certain souplesse imposée par la réglementation dite « choc piéton ».

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Capot à doublure renforcée pour véhicule, en particulier pour véhicule automobile, qui comprend une peau et une doublure (1), assemblée bord à bord à la peau et pourvue de raidisseurs (2, 3, 4), la doublure (1) étant pourvue d'au moins une moulure, obtenue par emboutissage de la doublure (1) **caractérisée en ce que** ladite moulure relie entre eux au moins : deux raidisseurs latéraux (2, 3) situés dans le voisinage des deux articulations latérales du capot, respectivement, et un raidisseur central (4) avant situé dans le voisinage du support de gâche du capot.

2. Capot selon la revendication 1, **caractérisé en ce que** la moulure est composée de deux parties de moulure (10, 11) reliant chacune le raidisseur central (4) et un raidisseur latéral (2, 3), respectivement.

3. Capot selon la revendication 2, **caractérisé en ce que** la moulure comporte, de plus, une troisième partie de moulure, qui relie lesdites deux parties de moulure (10, 11), de manière à constituer une moulure unique (12) qui relie les trois raidisseurs (2, 3, 4).

4. Capot selon l'une quelconque des revendications 1 à 3, **caractérisé en ce que** la forme de la section de la moulure (10, 11 ; 12) est choisie parmi l'une des formes suivantes : arc de cercle, partie de rectangle, de carré, de triangle ou de trapèze.

5. Capot selon l'une quelconque des revendications 1 à 4, **caractérisé en ce que** la réalisation de la moulure (10, 11 ; 12) est intégrée au procédé de fabrication par emboutissage de la doublure (1) de capot.

6. Véhicule automobile comportant un capot à doublure renforcée qui comprend une peau et une doublure (1), assemblée bord à bord à la peau et pourvue de raidisseurs (2, 3, 4), **caractérisé en ce que** la doublure (1) est pourvue d'au moins une moulure, obtenue par emboutissage de la doublure (1), qui relie entre eux au moins : deux raidisseurs latéraux (2, 3) situés dans le voisinage des deux articulations latérales du capot, respectivement, et un raidisseur central (4) avant situé dans le voisinage du support de gâche du capot.

7. Véhicule selon la revendication 6, **caractérisé en ce que** la moulure est composée de deux parties de moulure (10, 11) reliant chacune le raidisseur central (4) et un raidisseur latéral (2, 3), respectivement.

8. Véhicule selon la revendication 7, **caractérisé en ce que** la moulure comporte, de plus, une troisième partie de moulure, qui relie lesdites deux parties de moulure (10, 11), de manière à constituer une moulure unique (12) qui relie les trois raidisseurs (2, 3, 4).

9. Véhicule selon l'une quelconque des revendications 6 à 8, **caractérisé en ce que** la forme de la section de la moulure (10, 11 ; 12) est choisie parmi l'une des formes suivantes : arc de cercle, partie de rectangle, de carré, de triangle ou de trapèze.

10. Véhicule selon l'une quelconque des revendications 6 à 9, **caractérisé en ce que** la réalisation de la moulure (10, 11 ; 12) est intégrée au procédé de fabrication par emboutissage de la doublure (1) de capot.

## Claims

1. Bonnet with a reinforced lining for a vehicle, particularly for a motor vehicle, which comprises a skin and a lining (1), assembled edge to edge with the skin and provided with stiffness (2, 3, 4), the lining (1) being provided with at least one moulding, obtained by pressing the lining (1), **characterized in that** the said moulding connects together at least: two lateral stiffeners (2, 3) situated in the vicinity of the two lateral bonnet articulations respectively, and a front central Seffner (4) situated in the vicinity of the bonnet latch mount.

2. Bonnet according to Claim 1, **characterized in that** the moulding is made up of two moulding parts (10, 11) each connecting the central stiffener (4) and a lateral stiffener (2, 3) respectively.

3. Bonnet according to Claim 2, **characterized in that** the mould additionally comprises a third moulding part which connects the said two moulding parts (10, 11) in such a way as to form a single moulding (12) which connects all three stiffeners (2, 3, 4).

4. Bonnet according to any one of Claims 1 to 3, **characterized in that** the shape of the cross section of the moulding (10, 11; 12) is chosen from one of the following shapes: circular arc, part of a rectangle, of a square of a triangle or of a trapezium.

5. Bonnet according to any one of Claims 1 to 4, **characterized in that** producing the moulding (10, 11; 12) is incorporated into the manufacturing process whereby the bonnet lining (1) is formed by pressing.

6. Motor vehicle comprising a bonnet with reinforced lining which comprises a skin and a lining (1), assembled to edge to edge with the skin and provided with stiffeners (2, 3, 4), **characterized in that** the lining (1) is provided with at least moulding, obtained by pressing the lining (1), which joins together at least: two lateral stiffeners (2, 3) situated in the vicinity of the two lateral bonnet articulations respectively, and a front central stiffener (4) situated in the vicinity of the bonnet catch mount.

7. Vehicle according to Claim 6, **characterized in that** the moulding is made up of two moulding parts (10, 11) each connecting the central stiffener (4) and a lateral stiffener (2, 3) respectively.

8. Vehicle according to Claim 7, **characterized in that** the moulding additionally comprises a third moulding part which connects the said two moulding parts (10, 11) so as to form a single moulding (12) which connects all three stiffeners (2, 3, 4).

9. Vehicle according to any one of Claims 6 to 8, **characterized in that** the shape of the cross section of the moulding (10, 11; 12) is chosen from one of the following shapes: circular arc, part of a rectangle, of a square, of triangle or of a trapezium.

10. Vehicle according to any one of Claims 6 to 9, **characterized in that** the production of the moulding (10, 11; 12) is incorporated in the manufacturing process whereby the bonnet lining (1) is produced by pressing.

## Patentansprüche

1. Motorhaube mit verstärkter Auskleidung für ein Fahrzeug, insbesondere für ein Kraftfahrzeug, die eine Haut und eine Auskleidung (1) enthält, die auf Stoß an die Haut angefügt wird und mit Versteifungen (2, 3, 4) versehen ist, wobei die Auskleidung mit mindestens einer durch Tiefziehen der Auskleidung (1) erhaltenen Sicke versehen ist, **dadurch gekennzeichnet, dass** die Sicke mindestens miteinander verbindet: zwei seitliche Versteifungen (2, 3), die sich je in der Nähe der zwei seitlichen Gelenke der Motorhaube befinden, und eine zentrale vordere Versteifung (4), die sich in der Nähe des Schließhakenträgers der Motorhaube befindet.

2. Motorhaube nach Anspruch 1, **dadurch gekennzeichnet, dass** die Sicke aus zwei Sickenteilen (10, 11) besteht, die jede die zentrale Versteifung (4) und eine seitliche Versteifung (2, 3) verbinden.

3. Motorhaube nach Anspruch 2, **dadurch gekennzeichnet, dass** die Sicke außerdem einen dritten Sickenteil aufweist, der die zwei Sickenteile (10, 11) verbindet, um eine einzige Sicke (12) zu bilden, die die drei Versteifungen (2, 3, 4) verbindet.

4. Motorhaube nach einem der Ansprüche 1 bis 3, **dadurch gekennzeichnet, dass** die Form des Querschnitts der Sicke (10, 11; 12) unter einer der folgenden Formen ausgewählt wird: Kreisbogen, Teil eines Rechtecks, eines Quadrats, eines Dreiecks oder eines Trapezes.

5. Motorhaube nach einem der Ansprüche 1 bis 4, **dadurch gekennzeichnet, dass** die Herstellung der Sicke (10, 11; 12) in das Herstellungsverfahren der Auskleidung (1) der Motorhaube durch Tiefziehen integriert ist.

6. Kraftfahrzeug, das eine Motorhaube mit verstärkter Auskleidung aufweist, die eine Haut und eine Auskleidung (1) enthält, die auf Stoß an die Haut angefügt und mit Versteifungen (2, 3, 4) versehen ist, **dadurch gekennzeichnet, dass** die Auskleidung (1) mit mindestens einer durch Tiefziehen der Auskleidung (1) erhaltenen Sicke versehen ist, die mindestens miteinander verbindet: zwei seitliche Versteifungen (2, 3), die sich je in der Nähe der zwei seitlichen Gelenke der Motorhaube befinden, und eine zentrale vordere Versteifung (4), die sich in der Nähe des Schließhakenträgers der Motorhaube befindet.

7. Fahrzeug nach Anspruch 6, **dadurch gekennzeichnet, dass** die Sicke aus zwei Sickenteilen (10, 11) besteht, die jede die zentrale Versteifung (4) und eine seitliche Versteifung (2, 3) verbinden.

8. Fahrzeug nach Anspruch 7, **dadurch gekennzeichnet, dass** die Sicke außerdem einen dritten Sickenteil aufweist, der die zwei Sickenteile (10, 11) verbindet, um eine einzige Sicke (12) zu bilden, die die drei Versteifungen (2, 3, 4) verbindet.

9. Fahrzeug nach einem der Ansprüche 6 bis 8, **dadurch gekennzeichnet, dass** die Form des Querschnitts der Sicke (10, 11; 12) aus einer der folgenden Formen ausgewählt wird: Kreisbogen, Teil eines Rechtecks, eines Quadrats, eines Dreiecks oder eines Trapezes.

10. Fahrzeug nach einem der Ansprüche 6 bis 9, **dadurch gekennzeichnet, dass** die Herstellung der Sicke (10, 11; 12) in das Herstellungsverfahren der Auskleidung (1) der Motorhaube durch Tiefziehen integriert ist.
